# EUROPÄISCHE PATENTANMELDUNG

(11) **EP 3 045 747 A1**
(43) Veröffentlichungstag der Anmeldung: **20.07.2016**
(21) Anmeldenummer: 15151547.5
(22) Anmeldetag: 16.01.2015
(51) Int. Cl.: F16B 45/04, B63C 11/02

(54) **Karabinerhaken mit Betätigungshilfselement und Verwendung eines Betätigungshilfselements**

(71) Anmelder: Nieht, Niclas Florian, 50321 Brühl (DE)
(72) Erfinder: Nieth, Niclas Florian, 50321 Brühl (DE)
(74) Vertreter: Neumann Müller Oberwalleney & Partner Patentanwälte

(57) **Zusammenfassung**

Karabinerhaken umfassend:
einen Basiskörper 1 mit einem Hakenabschnitt 3,
einen Bolzen 6, der am Basiskörper 1 zwischen einer Schließstellung, in der der Bolzen 6 den Hakenabschnitt 3 verschließt, und einer Offenstellung verschiebbar ist,
ein Betätigungselement 8 am Bolzen 6 und
ein Betätigungshilfselement 12, das am Betätigungselement 8 befestigt ist.

## Beschreibung

Die Erfindung betrifft einen Karabinerhaken, der einen Basiskörper mit einem Hakenabschnitt, einen Bolzen, welcher am Basiskörper zwischen einer Schließstellung, in der der Bolzen den Hakenabschnitt verschließt, und einer Offenstellung verschiebbar ist, und ein Betätigungselement am Bolzen aufweist.

Ferner betrifft die Erfindung die Verwendung eines Betätigungshilfselements zum lösbaren Befestigen an einem Betätigungselement eines solchen Karabinerhakens.

Karabinerhaken, insbesondere Wirbelkarabiner, sind in vielerlei Ausgestaltung allgemein bekannt. Eine Ausführungsform eines Karabinerhakens ist zum Beispiel in der US 2006/0085954 A1 beschrieben. Der Karabinerhaken weist einen Basiskörper auf, der einen Schaftabschnitt und einen Hakenabschnitt bildet. Der Hakenabschnitt ist im Wesentlichen C-förmig gestaltet und an einer Seite offen. Die Öffnung des Hakens lässt sich mittels eines axial verschiebbaren Bolzens verschließen. Der Bolzen ist in einer Führungsbohrung im Schaftabschnitt des Basiskörpers verschiebbar geführt und lässt sich über ein Betätigungselement manuell verstellen. Der Bolzen ist mittels einer Druckfeder in Richtung einer Schließstellung, in der der Bolzen den Hakenabschnitt verschließt, mit Kraft beaufschlagt. Das Betätigungselement ist seitlich vom Bolzen vorstehend angeordnet. Das Betätigungselement weist einen schmalen Schaftabschnitt auf, mit dem das Betätigungselement durch einen Schlitz im Basiskörper aus der Führungsbohrung des Basiskörpers, in der der Bolzen und die Druckfeder angeordnet sind, herausragt. An dem Ende des Schaftabschnitts des Bolzens befindet sich ein gegenüber dem Schaftabschnitt erweiterter Kopfabschnitt, der mit dem Daumen manuell betätigt werden kann.

Die Betätigung ist insbesondere dann erschwert, wenn der Karabinerhaken mit Handschuhen geöffnet werden muss, insbesondere bei der Verwendung des Karabinerhakens beim Tauchen, wenn der Taucher einen Trockenanzug mit entsprechenden Handschuhen trägt.

Die Aufgabe der vorliegenden Erfindung liegt darin, Mittel zur Verfügung zu stellen, mit denen ein Karabinerhaken einfacher, zum Beispiel mit Handschuhen, betätigt werden kann und auch bei Verhältnissen betätigt werden kann, unter denen eine optische Kontrolle der Betätigung nicht möglich ist.

Die Erfindung wird durch einen eingangs genannten Karabinerhaken gelöst, wobei ein Betätigungshilfselement vorgesehen ist, das am Betätigungselement befestigt ist.

Durch das Anbringen eines separaten Betätigungshilfselements an dem Betätigungselement bietet sich für das manuelle Verstellen des Betätigungselements eine größere Angriffsfläche, so dass das Betätigungselement mittels des Betätigungshilfselements einfach ertastbar und einfach bewegbar ist. Durch das einfache Ertasten des Betätigungselements lässt sich auch dessen Stellung feststellen, ohne diese optisch überprüfen zu müssen. Daher ist das Betätigungselement besonders bei Verhältnissen, unter denen eine optische Kontrolle der Betätigung nicht möglich ist, von Vorteil.

Das Betätigungshilfselement kann am Betätigungselement lösbar oder auch unlösbar befestigt sein. Unter einer lösbaren Verbindung ist hierbei zu verstehen, dass diese zerstörungsfrei lösbar ist, wie zum Beispiel beim Verschrauben oder kraftschlüssigen Verbindungen wie dem Verpressen. Unter einer unlösbaren Verbindung ist zu verstehen, dass diese nicht zerstörungsfrei gelöst werden kann, wie dies zum Beispiel beim Vernieten, Verkleben oder Verschweißen der Fall ist.

Insbesondere ist das Betätigungselement mit einem Schaftabschnitt vom Bolzen seitlich vorstehend angeordnet und weist einen gegenüber dem Schaftabschnitt erweiterten Kopfabschnitt auf. Hierdurch kann das Betätigungshilfselement einfach an dem Betätigungselement befestigt werden, insbesondere wenn das Betätigungshilfselement eine hinterschnittene Aufnahme aufweist, in der der Kopfabschnitt des Betätigungselements aufgenommen ist. Das Betätigungshilfselement kann hierbei aus einem elastischen gummiartigen Material hergestellt sein. Hierbei könnte das Betätigungshilfselement einstückig ausgebildet sein.

Das Betätigungshilfselement kann jedoch auch aus einem festen Material, wie Kunststoff oder einem Metallwerkstoff, hergestellt sein. Hierbei weist das Betätigungshilfselement zumindest zwei Schalen auf, die an Trennflächen miteinander in Anlage gehalten sind und miteinander verbunden sind, wobei die Trennflächen durch die Aufnahme verlaufen. Somit können die beiden Schalen seitlich auf den Kopfabschnitt des Betätigungselements aufgesteckt werden und anschließend miteinander verschraubt werden, so dass der Kopfabschnitt in der hinterschnittenen Aufnahme des Betätigungshilfselements sicher gehalten ist.

In diesem Zusammenhang bedeutet "hinterschnitten", dass die Aufnahme eine Öffnung aufweist, durch die das Betätigungselement in die Aufnahme hineinragen kann, wobei die Öffnung einen geringeren Durchmesser aufweist, als der Rest der Aufnahme, so dass der Kopfabschnitt nicht durch die Öffnung der Aufnahme hindurchpasst. Sofern das Betätigungshilfselement einstückig ausgebildet ist, muss daher das Betätigungshilfselement zumindest im Bereich der Aufnahme aus einem elastischen Material bestehen, so dass sich die Öffnung aufweiten kann, wenn das Betätigungshilfselement auf das Betätigungselement bzw. über den Kopfabschnitt desselben gestülpt wird. Wenn das Betätigungshilfselement auch im Bereich der Aufnahme aus einem festen, im Wesentlichen nicht elastischen Material besteht, muss das Betätigungshilfselement im Bereich der Aufnahme teilbar bzw. derart gestaltet sein, dass die Aufnahme geöffnet werden kann, so dass der Kopfabschnitt des Betätigungselements in die Aufnahme eingelegt werden kann, wobei der in seinen Abmessungen geringere Schaftabschnitt durch die Öffnung hindurchragt und der Kopfabschnitt sicher in der Aufnahme gehalten ist.

Die Trennflächen können vorzugsweise im Wesentlichen quer zu einer Längsachse des Bolzens verlaufen. Denkbar sind jedoch auch andere Orientierungen der Trennfläche. Die Trennfläche muss zudem nicht auf einer Ebene angeordnet sein, sondern kann durchaus gestuft sein oder Ausnehmungen und/oder Vorsprünge aufweisen. Zumindest in einer der Schalen kann eine Ausnehmung ausgebildet sein, die von der anderen Schale abgedeckt ist, wobei die beiden Schalen zusammen die Aufnahme bilden. Die andere Schale dient somit als Deckel, der die Aufnahme abdeckt. Alternativ ist auch denkbar, dass in beiden Schalen eine Ausnehmung ausgebildet ist, die zusammen die Aufnahme bilden, wobei auch die Öffnung der Aufnahme durch beide Schalen gebildet sein kann.

Vorzugsweise sind die beiden Schalen lösbar miteinander verbunden, insbesondere miteinander verschraubt oder verpresst sein. Die beiden Schalen können alternativ auch unlösbar miteinander verbunden sein, insbesondere vernietet, verklebt oder verschweißt sein.

Zum einfachen Ergreifen bzw. Betätigen weist das Betätigungshilfselement eine zumindest annähernd sphärische Außenfläche auf.

Die Aufgabe der Erfindung wird ferner durch die Verwendung eines Betätigungshilfselements zum Befestigen an ein Betätigungselement eines Karabinerhakens, gelöst, wobei der Karabinerhaken einen Hakenabschnitt und einen Bolzen, der zwischen einer Schließstellung, in der der Bolzen den Hakenabschnitt verschließt, und einer Offenstellung verschiebbar ist, aufweist, wobei der Bolzen das Betätigungselement zum Verstellen des Bolzens aufweist.

Das Hilfselement kann hierbei ausgebildet sein, wie vorangehend im Zusammenhang mit dem Karabinerhaken erläutert wurde.

Ein bevorzugtes Ausführungsbeispiel der Erfindung wird im Folgenden anhand der Figuren näher erläutert. Hierin zeigen:
- Figur 1: eine Frontansicht eines erfindungsgemäßen Karabinerhakens und
- Figur 2: einen Längsschnitt des Karabinerhakens gemäß Figur 1 entlang der Schnittlinie A-A.

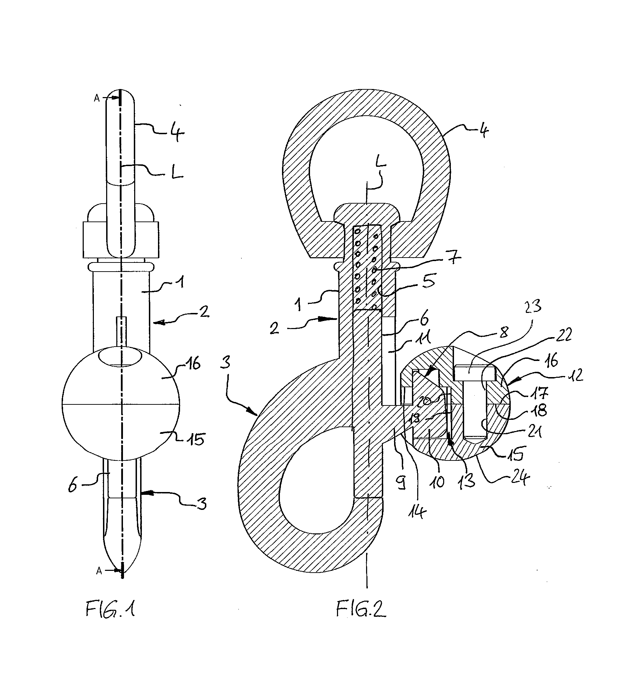

Die Figuren 1 und 2 werden im Folgenden zusammen beschrieben. Die Figuren zeigen einen Karabinerhaken in Form eines Wirbelkarabiners, der einen Basiskörper 1 mit einem Schaftabschnitt 2 und einen im Wesentlichen C-förmigen Hakenabschnitt 3 aufweist. Der Hakenabschnitt 3 ist an einem Ende des Schaftabschnitts 2 angeordnet. An einem vom Hakenabschnitt 3 abgewandten Ende des Schaftabschnitts 2 ist ein Ring 4 um eine Längsachse L des Schaftabschnitts 3 drehbar mit diesem verbunden.

In dem Schaftabschnitt 2 befindet sich eine Führungsbohrung 5, die entlang der Längsachse L verläuft. In der Führungsbohrung 5 ist ein Bolzen 6 entlang der Längsachse L verstellbar geführt. Der Bolzen 6 ist zwischen einer in Figur 1 dargestellten Schließstellung, in der der Bolzen 6 den Hakenabschnitt 3 verschließt, und einer nicht dargestellten Offenstellung, in der der Hakenabschnitt 3 geöffnet ist, verstellbar. Hierzu ist der Bolzen 6 in der Führungsbohrung 5 verstellbar geführt. In der Führungsbohrung 5 befindet sich zudem eine Druckfeder 7, welche sich einerseits gegen den Basiskörper 1 und andererseits gegen den Bolzen 6 abstützt und den Bolzen 6 zur Einnahme der Schließstellung mit Kraft beaufschlagt.

Zum Verstellen des Bolzens 6 gegen die Federkraft der Druckfeder 7 ist ein Betätigungselement 8 vorgesehen, welches seitlich vom Bolzen 6 vorsteht. Das Betätigungselement 8 weist einen Schaftabschnitt 9 auf, an dessen Ende ein gegenüber dem Schaftabschnitt 9 erweiterter Kopfabschnitt 10 vorgesehen ist. Der Schaftabschnitt 9 ist durch einen Schlitz 11 im Schaftabschnitt 2 des Basiskörpers 1 aus der Führungsbohrung 5 herausgeführt, so dass das Betätigungselement 8 über den Kopfabschnitt 10 von außen manuell betätigt werden kann.

Zur einfacheren Bedienung des Betätigungselements 8 ist ein Betätigungshilfselement 12 vorgesehen, welches lösbar mit dem Betätigungselement 8, insbesondere mit dem Kopfabschnitt 10, lösbar verbunden ist. Hierzu weist das Betätigungshilfselement 12 eine hinterschnittene Aufnahme 13 auf, welche den Kopfabschnitt 10 des Betätigungselements 8 aufnimmt. Die Aufnahme 13 weist eine Öffnung 14 auf, durch welche der Schaftabschnitt 9 in die Aufnahme 13 hineinragt. Die Öffnung 14 ist in ihren Abmessungen kleiner ausgestaltet, als die Aufnahme 13, so dass der Kopfabschnitt 10 sich innerhalb der Aufnahme 13 gegen das Betätigungshilfselement 12 abstützt und nicht aus der Aufnahme 13 herausgezogen werden kann. Zum Befestigen des Betätigungshilfselements 12 auf dem Betätigungselement 8 weist das Betätigungshilfselement 12 eine erste Schale 15 und eine zweite Schale 16 auf. Die erste Schale 15 weist eine erste Trennfläche 17 und die zweite Schale 16 eine zweite Trennfläche 18 auf, die miteinander in Anlage gehalten sind. Zum Befestigen des Betätigungshilfselements 12 auf dem Betätigungselement 8 bzw. zum Entfernen des Betätigungshilfselements 12 vom Betätigungselement 8 können die beiden Schalen 15, 16 entlang ihrer Trennflächen 17, 18 getrennt werden. Die Trennflächen 17, 18 verlaufen durch die Aufnahme 13 hindurch, so dass der Kopfabschnitt 10 des Betätigungselements 8 nach Auseinanderziehen der beiden Schalen 15, 16 freiliegt und aus der Aufnahme 13 entfernt werden kann bzw. die Schalen 15, 16 vom Kopfabschnitt 10 entfernt werden können.

In der vorliegenden Ausführungsform ist in die erste Schale 15 eine erste Ausnehmung 19 und in die zweite Schale 16 eine zweite Ausnehmung 20 eingebracht, die bei zusammengefügten Schalen 15, 16 zusammen die Aufnahme 13 bilden. Grundsätzlich ist es auch denkbar, dass lediglich in einer der beiden Schalen 15, 16 eine Ausnehmung vorgesehen ist, die von der anderen Schale abgedeckt wird.

Zur Befestigung der beiden Schalen 15, 16 ist in der ersten Schale 15 eine Gewindebohrung 21 und in der zweiten Schale 16 eine Durchgangsbohrung 22 vorgesehen, die im miteinander montierten Zustand zueinander fluchten. Eine Befestigungsschraube 23 ist durch die Durchgangsbohrung 22 hindurch in die Gewindebohrung 21 eingeschraubt und stützt sich mit ihrem Schraubenkopf gegen die zweite Schale 16 ab, so dass die beiden Schalen 15, 16 miteinander verschraubt sind.

Zur leichten Bedienung und Ertastung des Betätigungshilfselements 12 weist dieses eine annähernd sphärische Außenfläche 24 auf.

### Bezugszeichenliste

- 1: Basiskörper
- 2: Schaftabschnitt
- 3: Hakenabschnitt
- 4: Ring
- 5: Führungsbohrung
- 6: Bolzen
- 7: Druckfeder
- 8: Betätigungselement
- 9: Schaftabschnitt
- 10: Kopfabschnitt
- 11: Schlitz
- 12: Betätigungshilfselement
- 13: Aufnahme
- 14: Öffnung
- 15: erste Schale
- 16: zweite Schale
- 17: erste Trennfläche
- 18: zweite Trennfläche
- 19: erste Ausnehmung
- 20: zweite Ausnehmung
- 21: Gewindebohrung
- 22: Durchgangsbohrung
- 23: Befestigungsschraube
- 24: Außenfläche

- L: Längsachse

## Patentansprüche

1. Karabinerhaken umfassend:
einen Basiskörper (1) mit einem Hakenabschnitt (3),
einen Bolzen (6), der am Basiskörper (1) zwischen einer Schließstellung, in der der Bolzen (6) den Hakenabschnitt (3) verschließt, und einer Offenstellung verschiebbar ist,
ein Betätigungselement (8) am Bolzen (6) und
ein Betätigungshilfselement (12), das am Betätigungselement (8) befestigt ist.

2. Karabinerhaken nach Anspruch 1,
**dadurch gekennzeichnet,**
**dass** das Betätigungshilfselement (12) am Betätigungselement (8) lösbar, insbesondere durch Verschrauben oder Verpressen, oder unlösbar, insbesondere durch Vernieten, Verkleben oder Verschweißen, befestigt ist.

3. Karabinerhaken nach einem der vorangehenden Ansprüche,
**dadurch gekennzeichnet,**
**dass** das Betätigungselement (8) mit einem Schaftabschnitt (9) vom Bolzen (6) seitlich vorsteht und einen gegenüber dem Schaftabschnitt (9) erweiterten Kopfabschnitt (10) aufweist.

4. Karabinerhaken nach Anspruch 3,
**dadurch gekennzeichnet,**
**dass** das Betätigungshilfselement (12) eine hinterschnittene Aufnahme (13) aufweist, in der der Kopfabschnitt (10) des Betätigungselements (8) aufgenommen ist.

5. Karabinerhaken nach Anspruch 4,
**dadurch gekennzeichnet,**
**dass** das Betätigungshilfselement (12) zwei Schalen (15, 16) aufweist, die an Trennflächen (17, 18) miteinander in Anlage sind und miteinander verbunden sind, wobei die Trennflächen (17, 18) durch die Aufnahme (13) verlaufen.

6. Karabinerhaken nach einem der Ansprüche 4 bis 5,
**dadurch gekennzeichnet,**
**dass** das Betätigungshilfselement (12) zwei Schalen (15, 16) aufweist, wobei zumindest in einer der Schalen (15) eine Ausnehmung (19, 20) ausgebildet ist, die von der anderen Schale (16) abgedeckt ist und zusammen mit der anderen Schale (16) die Aufnahme (13) bildet.

7. Karabinerhaken nach Anspruch 6,
**dadurch gekennzeichnet,**
**dass** in beiden Schalen (15, 16) eine Ausnehmung (19, 20) ausgebildet ist, die zusammen die Aufnahme (13) bilden.

8. Karabinerhaken nach einem der Ansprüche 4 bis 7,
**dadurch gekennzeichnet,**
**dass** die Schalen (15, 16) lösbar miteinander verbunden, insbesondere verschraubt oder verpresst, sind oder
**dass** die Schalen (15, 16) unlösbar miteinander verbunden, insbesondere vernietet, verklebt oder verschweißt, sind.

9. Verwendung eines Betätigungshilfselements (12) zum Befestigen an ein Betätigungselement (8) eines Karabinerhakens,
wobei der Karabinerhaken einen Hakenabschnitt (3) und einen Bolzen (6), der zwischen einer Schließstellung, in der der Bolzen (6) den Hakenabschnitt (3) verschließt, und einer Offenstellung verschiebbar ist, aufweist, wobei der Bolzen das Betätigungselement zum Verstellen des Bolzens (6) aufweist.

10. Verwendung nach Anspruch 9,
**dadurch gekennzeichnet,**
**dass** das Betätigungshilfselement (12) eine hinterschnittene Aufnahme (13) zur Aufnahme eines erweiterten Kopfabschnitts (10) des Betätigungselements (8) des Karabinerhakens aufweist.

11. Verwendung nach Anspruch 10,
**dadurch gekennzeichnet,**
**dass** das Betätigungshilfselement (12) zwei Schalen (15, 16) aufweist, die an Trennflächen (17, 18) miteinander in Anlage sind und miteinander verbunden sind, wobei die Trennflächen (17, 18) durch die Aufnahme (13) verlaufen.

12. Verwendung nach einem der Ansprüche 10 oder 11,
**dadurch gekennzeichnet,**
**dass** das Betätigungshilfselement (12) zwei Schalen (15, 16) aufweist, wobei zumindest in einer der Schalen (15) eine Ausnehmung (19) ausgebildet ist, die von der anderen Schale (16) abgedeckt ist und zusammen mit der anderen Schale (16) die Aufnahme (13) bildet.

13. Verwendung nach Anspruch 12,
**dadurch gekennzeichnet,**
**dass** in beiden Schalen (15, 16) eine Ausnehmung (19, 20) ausgebildet ist, die zusammen die Aufnahme (13) bilden.

14. Verwendung nach einem der Ansprüche 9 bis 13,
**dadurch gekennzeichnet,**
**dass** die Schalen (15, 16) lösbar miteinander verbunden, insbesondere verschraubt oder verpresst, sind oder
**dass** die Schalen (15, 16) unlösbar miteinander verbunden, insbesondere vernietet, verklebt oder verschweißt, sind.
